**Europäisches Patentamt**

**European Patent Office**

**Office européen des brevets**

(19)

(11) Veröffentlichungsnummer: **0 475 289 A1**

# (12) EUROPÄISCHE PATENTANMELDUNG

(21) Anmeldenummer: **91115064.7**

(22) Anmeldetag: **06.09.91**

(51) Int. Cl.5: **C22B 3/02**, C22B 3/00

(30) Priorität: **13.09.90 DE 4028989**

(43) Veröffentlichungstag der Anmeldung:
**18.03.92 Patentblatt 92/12**

(84) Benannte Vertragsstaaten:
**AT BE CH DE FR GB IT LI NL**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Vikari, Werner**
**Im Ehrlich 30c**
**W-6100 Darmstadt(DE)**
Erfinder: **Steinsträsser, Ralf, Dr.**
**Egerländer Strasse 32**
**W-6101 Rossdorf(DE)**
Erfinder: **Nikolaus, Heinrich**
**Hans-Sachs-Weg 6**
**W-6100 Darmstadt(DE)**
Erfinder: **Feldmann-Schlohbohm, Günther**
**Frankfurter Strasse 4**
**W-6110 Dieburg(DE)**
Erfinder: **Behne, Klaus**
**Geissberg 41**
**W-6072 Dreieich(DE)**

(54) **Verfahren zur Rückgewinnung von Nickel.**

(57) Die Erfindung betrifft ein Verfahren zur Rückgewinnung von Nickel aus industriellen Abwässern, dadurch gekennzeichnet, daß man

a) das mit Nickel belastete Abwasser zur Abtrennung darin enthaltener fester Bestandteile mit einem Wellplattenabscheider (1) sedimentiert,

b) mit Flockungsmittel versetzt und mit Lauge oder Mineralsäure neutralisiert,

c) nach Ausflocken erneut mit einem Wellplattenabscheider (3) sedimentiert,

d) durch Sandfilter (4) filtriert,

e) das filtrierte Abwasser durch ein chelatbildendes Kationenaustauschersystem bestehend aus drei Austauschersäulen leitet, wobei die erste Säule (5) bis zum Nickeldurchbruch belastet wird, die zweite Säule (6) als Sicherheitsfilter dient und die dritte Säule (7) regeneriert wird bzw. frisch regeneriert in Bereitschaft steht,

f) die jeweils mit Nickel belastete Säule mit verdünnter Mineralsäure regeneriert, und

g) das Regenerat mit Natriumhypophosphit in Gegenwart katalytischer Mengen an Natriumborhydrid behandelt,

sowie eine Vorrichtung zur Durchführung dieses Verfahrens.

Fig.1

Die Erfindung betrifft ein Verfahren zur Rückgewinnung von Nickel aus industriellen Abwässern.

In vielen industriellen Prozessen, z.B. bei der Nickelplattierung, der Olefinoligomerisierung und der katalytischen Hydrierung mit Raney-Nickel, wird Nickel in unterschiedlichen Formen (metallisch, als Salz oder komplex gebunden) eingesetzt und fällt dabei im Abwasser ebenfalls in unterschiedlichen Formen an.

Das Problem der Rückgewinnung des Nickels aus mit Nickel belastenden Abwassern kann auf verschiedene Weisen gelöst werden.

Zur Reinigung der Abwässer bei der Nickelplattierung werden häufig Ionenaustauscherverfahren eingesetzt (z.B. JP 49 096 930) dabei können andere Metalle vorher durch Neutralisation mit Lauge als Hydroxide abgeschieden werden (z.B. JP 49 122 900) oder andere Bestandteile durch Filtration über Aktivkohle zurückgehalten werden (z.B. JP 49 054 231).

Die eingesetzten Ionenaustauschermaterialien sind in der Regel stark saure Kationenaustauscher. Die mit Nickel belasteten Ionenaustauscher werden in der Regel mit verdünnten Mineralsäuren regeneriert, wobei das zurückgewonnene Nickel in Form von Nickelsalzen erhalten wird.

Weiterhin ist es bekannt, Nickel aus Abwässern durch Elektrodiayse an Anionen- und Kationenaustauschermembranen zurückzugewinnen (z.B. JP 49 010 555).

Eine weitere Möglichkeit zur Beseitigung von Nickel aus Abwässern besteht darin, Nickel durch Elektrolyse abzuscheiden (z.B. Galvanotechnik, 73 (6) S. 589-593 (1982), US 4,556,469).

Eine weitere Möglichkeit besteht darin, aus den durch Ionenaustauscher gewonnenen Lösungen von Nickelsalzen metallisches Nickel elektrolytisch abzuscheiden (z.B. DD-204 950).

Weiterhin lassen sich Nickelsalze aus Abwässern durch Zugabe von Metallsalzen bei kontrolliertem pH-Wert ausfällen (z.B. JP 56 158 182. SU 1031911).

Die bisher bekannten Verfahren lassen sich jedoch nur auf Abwässer anwenden, die Nickel in gelöster Form enthalten.

Bei der katalytischen Hydrierung mit Raney-Nickel enthält das Abwasser Nickel in gelöster, fester, kolloidaler und komplex gebundener Form.

Eine Möglichkeit zur Abtrennung von suspendierten Schwermetallhydroxiden von den entsprechenden gelösten Ionen in Abwässern ist es, diese Abwässer über ein Dreischichtenfiltersystem zu leiten, wobei sich in den einzelnen Filtern Granulate mit unterschiedlicher Korngröße befinden (z.B. JP OS 55 005 732).

Keine der bisher bekannten Methoden ermöglicht es, aus mit Nickel in fester, ionogener, kolloider und komplex gebundener Form belastetem Abwasser Nickel bis auf einen Restanteil von < 1 mg/l zu entfernen.

Der vorliegenden Erfindung liegt das Problem zugrunde, aus mit Nickel in unterschiedlicher Form belasteten Abwässern das Nickel soweit zu entfernen und zurückzugewinnen, daß der Restgehalt an Nickel des so behandelten Abwassers weit unterhalb der gesetzlich vorgeschriebenen Normen liegt (z.B. H.P. Luehr, A. Schönfeld, Entsorgungspraxis, (11) S. 506-512 (1988)).

Die mit der Erfindung erzielten Vorteile bestehen insbesondere darin, daß das behandelte Abwasser einen Restgehalt an Nickel aufweist, der weit unterhalb der gesetzlich vorgeschriebenen Norm (z.B. Wasserhaushalts- und Abwasserabgabengesetz) liegt und zurückgewonnenes Nickel wieder für industrielle Prozesse genutzt werden kann.

Gegenstand der Erfindung ist somit ein Verfahren zur Rückgewinnung von Nickel aus industriellen Abwässern, wobei man

a) das mit Nickel belastete Abwasser zur Abtrennung darin enthaltener fester Bestandteile mit einem Wellplattenabscheider (1) sedimentiert,

b) mit Flockungsmittel versetzt und mit Lauge oder Mineralsäure neutralisiert,

c) nach Ausflocken erneut mit einem Wellplattenabscheider (3) sedimentiert,

d) durch Sandfilter (4) filtriert,

e) das filtrierte Abwasser durch ein chelatbildendes Kationenaustauschersystem bestehend aus drei Austauschersäulen leitet, wobei die erste Säule (5) bis zum Nickeldurchbruch belastet wird, die zweite Säule (6) als Sicherheitsfilter dient und die dritte Säule (7) regeneriert wird bzw. frisch regeneriert in Bereitschaft steht,

f) die jeweils mit Nickel belastete Säule mit verdünnter Mineralsäure regeneriert, und

g) das Regenerat mit Natriumhypophosphit in Gegenwart katalytischer Mengen an Natriumborhydrid behandelt.

Insbesondere Gegenstand der Erfindung ist ein Verfahren, wobei man die Sedimentation (a) bei Temperaturen zwischen 60° und 90 °C durchführt.

Eine vorteilhafte Ausgestaltung der Erfindung ist ein Verfahren, wobei man den pH-Wert (b) auf 5-8,5 einstellt.

Weiterhin Gegenstand der Erfindung ist eine Vorrichtung zur Rückgewinnung von metallischem Nickel aus industriellen Abwässern im wesentlichen bestehend aus

a) einem ersten Wellplattenabscheider (1) zur Abtrennung fester Bestandteile,

b) einem Neutralisations- und Flockungsbehälter (2),

c) einem zweiten Wellplattenabscheider (3) zur Abtrennung der in (2) ausgeflockten Bestandteile,

d) zwei oder mehreren parallel geschalteten Sandfiltern (4),

e) drei Kationenaustauschersäulen (5), (6), (7) mit chelatbildendem Kationenaustauscher und

f) einem Reduktionsbehälter (8).

Die Abwässer sind in der Regel in folgender Weise mit Nickel belastet:

a) Allgemeines Abwasser:

10-100 mg/l Ni (metallisch)

ca. 20 mg/l Ni (ionogen, kolloidal und komplex)

b) Regenerationswässer der Ionenaustauscher

ca. 10 mg/l Ni (ionogen, kolloidal und komplex)

Nach der Behandlung mit dem erfindungsgemäßen Verfahren enthalten diese Abwässer weniger als 1 mg/l Ni.

Ein Ausführungsbeispiel der Erfindung ist in der Zeichung dargestellt und wird im folgenden näher beschrieben.

Es zeigen

Fig. 1     Fließbild zur Abscheidung fester Bestandteile (Teil 1 der Anlage)

Fig. 2     Fließbild zur Abscheidung gelöster Bestandteile (Teil 2 der Anlage)

Es folgt die Erläuterung der Erfindung anhand der Zeichungen nach Aufbau und Wirkungsweise der Erfindung.

Beschreibung des Verfahrens

1. Fig. 1:

Die mit Nickel belasteten Abwasserströme fließen in dem Sammelschacht (9) zusammen. Dieser Schacht hat einen Rauminhalt von ca. 15 m$^3$, von denen etwa 3 m$^3$ als Arbeitsbereich dienen. Die Durchmischung erfolgt durch Einblasen von Druckluft.

Mittels einer Tauchpumpe, die über den Füllstand im Sammelschacht (9) ein- und ausgeschaltet wird, wird das Wasser zur Erhitzung auf 60-90 °C über einen Wärmetauscher und anschließend auf den im Gegenstrom betriebenen Wellplattenabscheider (1) gepumpt, dessen Aufgabe es ist, einerseits mitgerissene Spuren von Getriebeöl und andererseits die Hauptmenge an metallischem Nickel aus dem Wasser abzutrenenn. Im nachgeschalteten Neutralisations- und Flockungsbehälter (2) wird durch Zudosierung von Lauge, vorzugsweise Natronlauge (mittels einer Dosierpumpe aus Vorratsbehälter (10)) oder Mineralsäure, vorzugsweise Salzsäure (mittels einer Dosierpumpe aus Vorratsbehälter (11)) der pH-Wert auf einen Wert zwischen 5 und 8,5, insbesondere zwischen 6 und 8,5, korrigiert sowie durch Zugabe von Flockungshilfsmittel mittels einer Dosierpumpe aus dem Ansatzbehälter (12) die Flockung ausgelöst.

Geeignete Flockungsmittel sind anionische Copolymere von (Meth)-Acrylamid mit zunehmendem Anteil von (Meth)Acrylat, insbesondere Preastol® 2540 (Fa. Stockhausen GmbH, Krefeld).

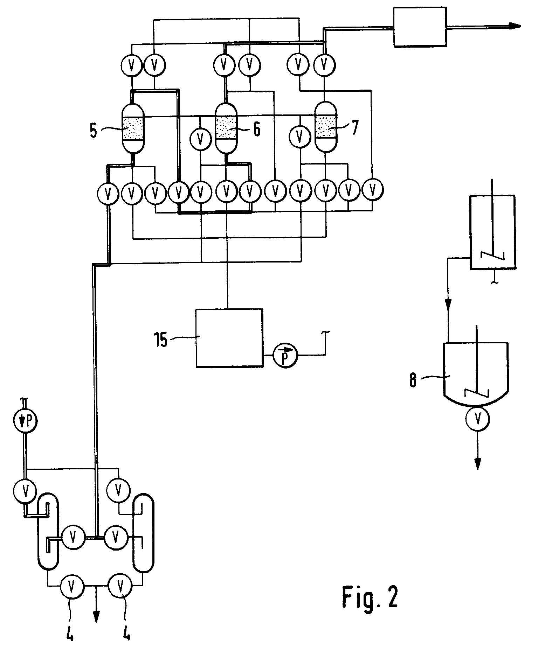

Die ausgefallenen Festanteile werden mit dem nachgeschalteten Wellplattenabscheider (3) abgetrennt. Nach Absenkung des pH-Wertes im Durchflußmischer (13) sammelt sich das Wasser im Behälter (14), der als Vorlage für die beiden alternativ zu benutzenden Sandfilter (4) dient. Das vom Sandfilter ablaufende Abwasser enthält keinerlei Trübstoffe mehr, die zu einer Verstopfung der zum zweiten Teil (Fig. 2) der Anlage gehörenden Chelataustauschersäulen (5), (6), (7) führen können.

2. Fig. 2:

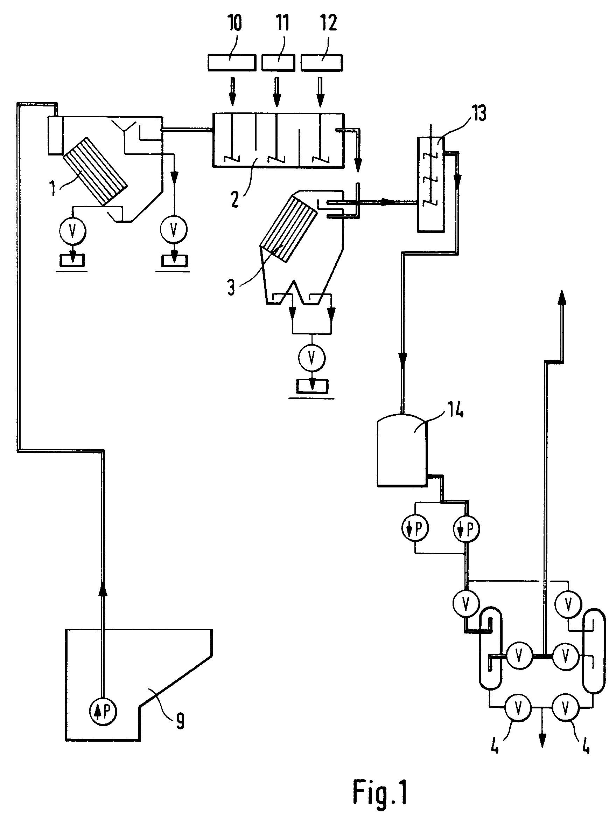

Das aus Teil 1 der Abwasservorbehandlungsanlage (Fig. 1) aus den Sandfiltern (4) ablaufende, von festen Nickelanteilen befreite Abwasser (2,0 m$^3$/h-5,0 m$^3$/h, enthaltend 10-50 mg Nickel in gelöster Form) läuft über zwei hintereinandergeschaltete, mit dem Chelataustauscherharz gefüllte Säulen (5),(6), in denen Nickel selektiv zurückgehalten wird. Geeignete Chelataustauscherharze sind z.B. schwachsaure bis schwachalkalische Polystyrolharze, welche als Ankergruppen Iminodiacetatgruppen aufweisen. Die Korngröße liegt zwischen 0,3 und 1,2 mm, die effektive Korngröße zwischen 0,45 ubd 0,55 mm. Ein besonders bevorzugtes Harz ist Lewatit® TP 207 (Fa. Bayer, Leverkusen) oder Dow® Typ XF-4195 (Fa. Dow Chemical).

Die erste Säule (5) wird bis zum Nickeldurchbruch belastet, während die zweite als Sicherheitsfilter dient. Nach Erschöpfung der ersten Säule wird diese aus dem Verbund herausgenommen und durch eine frisch regenerierte Säule (7) ersetzt, die hinter die noch in Betrieb befindliche, teilweise mit Nickel belastete Säule geschaltet wird. Das Austauschersystem besteht also aus den drei Säulen (5), (6) und (7), von denen immer zwei (5) und (6) in Betrieb sind, während die dritte (7) regeneriert wird oder frisch regeneriert in Bereitschaft steht.

Anschließend wird das Wasser mit einem Restgehalt von < 1 mg Nickel/l über ein Mengenzählwerk und eine mengenproportionale Probenahmestation in das Kanalnetz eingeleitet und der Abwasserreinigungsanlage zugeführt.

Die Regeneration der mit Nickel beladenen Austauschersäulen (5), (6) und (7) erfolgt mit verdünnter Mineralsäure, insbesondere Salzsäure. Nach der Regeneration kann das Chelatharz bei Bedarf mittels einer Pumpe mit einer Lösung von Kochsalz in verdünnter Natronlauge konditioniert werden.

Das Regenerat der Chelataustauscher, enthaltend durchschnittlich 10-30 g Nickel pro Liter in salzsaurer Lösung, wird in dem emaillierten Stahlbehälter (15) gesammelt. Diese Lösung kann entweder wieder als Rohstoff eingesetzt werden oder im Rührwerks-Behälter (8) auf 50 °C erwärmt und bei pH 5 mit 50prozentiger Natriumhyphosphit-Lösung in Gegenwart katalytischer Mengen von Natriumborhydrid zu metallischem Nickel reduziert werden. Dieses wird im Wellplattenabscheider (1) (Teil 1 der Abwasservorbehandlungsanlage) zusammen mit den festen Nickelanteilen des ursprünglichen Abwassers abgetrennt und der weiteren Aufarbeitung zugeführt.

Die Reduktion von wäßrigen Nickelsalz-Lösungen mit Natriumhypophosphit in Gegenwart von katalytischen Mengen Natriumborhydrid ist an sich bekannt (z.B. Firmenschrift der Fa. Morton Thikol, N.V.-S.A. Ventron Division: M Fleming "Reduction of Nickel (II) Complexes in Spent Electroless Plating Baths with VenPure® Sodium Borohydride"). Zur Reduktion von 1000 l des Regenerats werden je nach Nickelgehalt 20-50 kg Natriumhypophosphit und 0,15-0,6 kg Natriumborhydrid benötigt.

**Patentansprüche**

1. Verfahren zur Rückgewinnung von Nickel aus industriellen Abwässern, dadurch gekennzeichnet. daß man

   a) das mit Nickel belastete Abwasser zur Abtrennung darin enthaltener fester Bestandteile mit einem Wellplattenabscheider (1) sedimentiert,

   b) mit Flockungsmittel versetzt und mit Lauge oder Mineralsäure neutralisiert,

   c) nach Ausflocken erneut mit einem Wellplattenabscheider (3) sedimentiert,

   d) durch Sandfilter (4) filtriert,

   e) das filtrierte Abwasser durch ein chelatbildendes Kationenaustauschersystem bestehend aus drei Austauschersäulen leitet, wobei die erste Säule (5) bis zum Nickeldurchbruch belastet wird, die zweite Säule (6) als Sicherheitsfilter dient und die dritte Säule (7) regeneriert wird bzw. frisch regeneriert in Bereitschaft steht,

   f) die jeweils mit Nickel belastete Säule mit verdünnter Mineralsäure regeneriert, und

   g) das Regenerat mit Natriumhypophosphit in Gegenwart katalytischer Mengen an Natriumborhydrid behandelt.

2. Verfahren nach Anspruch 1, dadurch gekennzeichnet, daß man die Sedimentation (a) bei Temperaturen zwischen 60° und 90 °C durchführt.

3. Verfahren nach Anspruch 1, dadurch gekennzeichnet, daß man den pH-Wert (b) auf 5-8,5 einstellt.

4. Vorrichtung zur Rückgewinnung von metallischem Nickel aus industriellen Abwässern im wesentlichen bestehend aus

   a) einem ersten Wellplattenabscheider (1) zur Abtrennung fester Bestandteile,

   b) einem Neutralisations- und Flockungsbehälter (2),

   c) einem zweiten Wellplattenabscheider (3) zur Abtrennung der in (2) ausgeflockten Bestandteile,

   d) zwei oder mehreren parallel geschalteten Sandfiltern (4),

   (e) drei Kationenaustauschersäulen (5), (6), (7) mit chelatbildendem Kationenaustauscher und

   f) einem Reduktionsbehälter (8).

**Fig.1**

Fig. 2

Europäisches
Patentamt

**EUROPÄISCHER RECHERCHENBERICHT**

Nummer der Anmeldung

EP    91 11 5064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | WPI, FILE SUPPLIER, Derwent Publications Ltd., London, GB; AN=74-81644 & JP49054231 (KABAYA KOGYO KK) 27-05-74 <br> * Zusammenfassung * <br> --- | 1-3 | C22B3/02 <br> C22B3/00 |
| A,D | WPI, FILE SUPPLIER, Derwent Publications Ltd., London, GB; AN=75-23125 & JP49122900 (KAYABA INDUSTRY CO LTD) 25-11-74 <br> * Zusammenfassung * <br> --- | 1-3 | |
| A,D | WPI, FILE SUPPLIER, Derwent Publications Ltd., London, GB; AN=75-36568 & JP49096930 (CHUO PRODUCTS) 13-09-74 <br> * Zusammenfassung * <br> --- | 1-3 | |
| A,D | PATENT ABSTRACTS OF JAPAN vol. 6, no. 40 (C-094)12. März 1982 & JP-A-56 158 182 (NIKKEI GIKEN KK) 5. Dezember 1981 <br> * Zusammenfassung * <br> ----- | 1-3 | |

**RECHERCHIERTE SACHGEBIETE (Int. Cl.5)**

C22B
C02F

Der vorliegende Recherchenbericht wurde für alle Patentansprüche erstellt

| Recherchenort | Abschlußdatum der Recherche | Prüfer |
|---|---|---|
| DEN HAAG | 13 DEZEMBER 1991 | WITTBLAD U.A. |

EPO FORM 1503 03.82 (P0403)